# EUROPEAN PATENT APPLICATION

(11) **EP 3 812 556 A1**
(43) Date of publication of application: **28.04.2021**
(21) Application number: 20203068.0
(22) Date of filing: 21.10.2020
(51) Int. Cl.: F01N 3/05, F01N 13/08

(54) **COOLING MEANS FOR EXHAUST GAS**

(30) Priority: 23.10.2019 GB 201915355
(71) Applicant: Timberwolf Limited, Stowmarket, Suffolk IP14 5AY (GB)
(72) Inventor: HERCLIFFE, Matt, Stowmarket Suffolk IP14 5AY (GB)
(74) Representative: ip21 Ltd

(57) **Abstract**

An exhaust gas cooling apparatus adapted to attach to an exhaust conduit, the apparatus comprising a tubular shroud body having input end and an output end, the input end having a bell mouth opening adapted to be in fluid communication with the said exhaust conduit and so that a substantially annular gap is formed between the said exhaust conduit and the bell mouth opening, the apparatus further comprising a curved shroud portion and two curved vanes each located at the output end of the shroud body, and wherein the curved shroud portion extends further in the direction of a central axis of the shroud body beyond the output end of the shroud body than each of the curved vanes, and in turn a first of the curved vanes extends further in the direction of the central axis of the shroud body beyond the output end than a second of the curved vanes, wherein the first of the curved vanes is located between the curved shroud portion and the second of the curved vanes, and wherein at the output end the shroud body has a an edge portion which is not perpendicular to the central axis of the shroud body.

## Description

### Field of the inventive concept

The present inventive concept relates to cooling means for exhaust gas, especially for the cooling of exhaust gas from internal combustion engines such as diesel engines.

### Background to the inventive concept

Diesel engines are well known. Many industrial vehicles - such as plant vehicles - put into effect diesel engines to provide traction for the vehicles as well as energy for specific purposes for that vehicle. For example, wood chipping machines may require traction to place the machine at a suitable site (such as near wood to be chipped) as well as power to operate a machine to chip the wood itself.

As work continues to reduce the environmental impact of such diesel engines, various modifications have been proposed.

Especially, diesel engines are often fitted with a diesel particulate filter (DPF) which aims to reduce the amount of soot, which arises from combustion of diesel fuel, from entering the environment. A well-known issue of DPFs is that soot builds up in the filter and can eventually block the filter. DPFs therefore require regular "regeneration" to continue to operate effectively.

A common method of "active" regeneration is for the exhaust gas temperature to be raised to a much higher level than normal by injecting unburnt fuel into the exhaust system, thereby increasing the temperature of the DPF. Under some circumstances such a temperature rise can happen during normal operation; known as "passive" regeneration.

For many situations, active regeneration of a DPF can be organised non-problematically. For example, by moving the vehicle or machine to a position where a much higher exhaust temperature is unlikely to cause problems - such as away from any potential safety hazards. However, such repositioning etc. may be impractical for some situations. In the example of a wood chipping machine, raising the exhaust temperature significantly may give rise to a heightened risk of combustion of ambient combustible material, such as wood waste, dust and the like.

Some vehicles and machines of this type utilise a chimney-type arrangement to direct hot exhaust gas further away from the vehicle or machine, but this is unlikely to be suitable for use in situations where combustible material may nonetheless be close to the exit of the chimney.

Therefore, there is a need for an arrangement which facilitates passive and active regeneration of diesel particulate filters while minimising any interruption to the operation of the associated machinery.

Whilst the device of the present inventive concept is primarily for compression ignited engines, with after-treatment, its functionality will also work with spark ignited engines, where the exhaust temperature needs to be reduced - as well as other fields of technology where the need is similar.

WO 2007/022324 of Freightliner discloses an arrangement aimed at reducing the temperature of exhaust gas.

GB 660478 of Sutton discloses an arrangement aimed at directing exhaust gas towards the ground.

Neither of those documents discloses the features as set out in combination in the present disclosure. Furthermore, as will be notable below, the effect of the combination of features claimed herein provides a significant and synergistic improvement to the art.

### Summary of the inventive concept

The present inventive concept provides an exhaust gas cooling apparatus adapted to attach to an exhaust conduit, the apparatus comprising a tubular shroud body having an input end and an output end, the input end having a bell mouth opening adapted to be in fluid communication with the said exhaust conduit and comprising an attachment means so that a substantially annular gap is formed between the said exhaust conduit and the bell mouth opening, the apparatus further comprising a curved shroud portion and two curved vanes each located at the output end of the shroud body, and wherein the curved shroud portion extends further in the direction of a central axis of the shroud body beyond the output end of the shroud body than each of the curved vanes, and in turn a first of the curved vanes extends further in the direction of the central axis of the shroud body beyond the output end than a second of the curved vanes, wherein the first of the curved vanes is located between the curved shroud portion and the second of the curved vanes, and wherein at the output end the shroud body has a an edge portion which is not perpendicular to the central axis of the shroud body.

The curvature of the curved shroud portion provides a non-axial flow characteristic, in use. Thus it is possible to direct the flow to an extent. Furthermore, such an arrangement is likely to provide additional directional diffusion of the mixture.

The curved shroud portion may have a substantially U-shaped cross-section. This aids the direction of the flow.

The attachment means may comprise one or more fins adapted to attach to an outer surface of the said exhaust conduit. Alternatively, the attachment means may comprise one or more fins attached to an outer surface of a tubular portion, the tubular portion adapted to engage with a corresponding tubular portion of the said exhaust conduit.

The diameter of the shroud body is selected to be larger than the diameter of the exhaust conduit. The bell mouth opening forms a region at the input end of the shroud body in which the diameter of the input end reduces from larger than the diameter of the bell mouth to the diameter of the shroud body itself.

In use, flow of exhaust gas from the exhaust conduit towards the shroud body and the arrangement of the bell mouth opening causes a "Venturi" effect in which ambient air near the bell mouth opening is drawn into the bell mouth opening and into the shroud body. Said ambient and said exhaust gas thus mix within the shroud body. As the ambient air is generally cooler than the exhaust gas, the temperature of the exhaust gas will generally fall as a result of the usual thermodynamic effects. The mixture is directed through the shroud body towards the output end thereof under pressure from further exhaust gas entering from the input end. The curved shroud portion and the two vanes somewhat separate the flow of the mixture and distributes it into the wider environment. Importantly, the volume into which the mixture is distributed is much larger than it would be if only a simple opening of the shroud body were provided. Thus, mixing of the mixture with cooler ambient air is enables, further cooling the mixture towards ambient air temperatures.

This apparatus thus results in a diffusing effect for the mixture of the exhaust gas and ambient air, to effect rapid cooling of the exhaust gas.

Furthermore, the apparatus provides surfaces capable of contacting the exhaust gas and/or mixture of exhaust gas and ambient air. Depending on the type of material or materials used in the construction of the apparatus, heat energy may be transferred to the apparatus by way of such contact. Thus, further cooling may be provided by way of conduction to the apparatus and subsequent conduction and radiation away from the apparatus into ambient air.

Thus, over a relatively short distance, the apparatus can provide significant cooling to exhaust gas entering from the exhaust conduit.

When located within an engine bay having a measured temperature therewithin of approximately 80 celcius, the apparatus is able to reduce exhaust gas measured at a post-DPF temperature of around 600 celcius (a regeneration temperature) to a temperature of around 160 celcius measured 100 mm away from the apparatus. The skilled reader will appreciate that 80 celcius is a higher temperature than many engine bays of vehicles or machines would operate at under normal circumstances.

Thus, the cooling achieved by the apparatus is such that it can operate effectively even when located within an engine bay of a machine.

The shroud body may comprise a slot adapted to accommodate each vane.

One or each of the vanes may have a substantially planar portion. A planar portion facilitates precise location within each respective slot of the shroud body.

The vanes may be arranged substantially parallel to one another. The planes of the vanes may be arranged to be substantially parallel to the central axis of the shroud body.

The shroud body may have a substantially circular cross-section, i.e. in a plane perpendicular to the central axis of the shroud body.

### Detailed description of the inventive concept

An exemplary embodiment of the inventive concept will now be described, with reference to the accompanying drawings, in which:
Figure 1 shows a perspective view of an exhaust gas cooling apparatus exemplifying the present inventive concept;
Figure 2 shows a side view of the same apparatus;
Figure 3 shows a further perspective view of the same apparatus in conjunction with ancillary parts; and
Figure 4 shows a further side view of the same apparatus, in combination with an exhaust conduit.

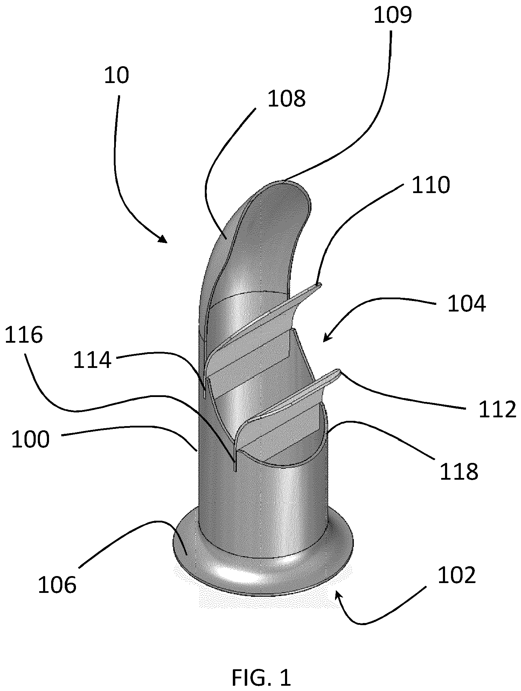

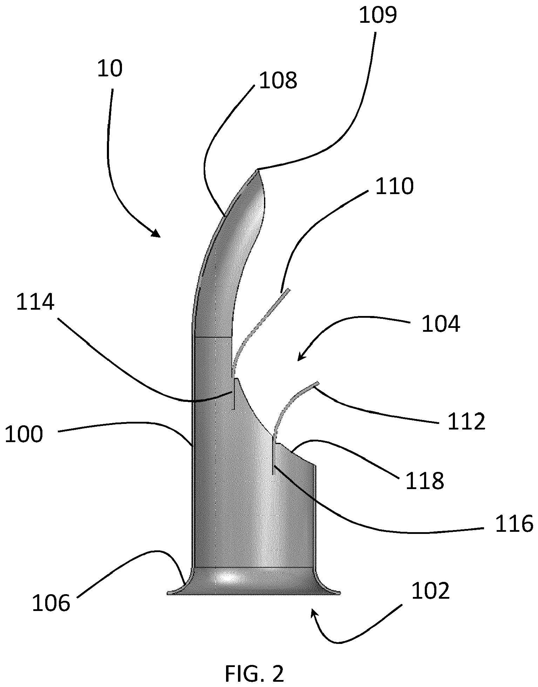

In Figures 1 and 2, an exhaust gas cooling apparatus 10 has a cylindrical shroud body 100 with a substantially circular cross-section and with a central axis (not shown) which is vertical in the arrangement shown. The shroud body 100 has an input end 102 and an output end 104. The general direction of flow of exhaust gas will be understood to be from the input end 102 to the output end 104, in use. A bell mouth 106 is arranged at the input end 102. The diameter of the shroud body 100 is selected to be larger than the diameter of the corresponding exhaust conduit (not shown) to which the apparatus 10 is adapted to attach to. The bell mouth 106 opening forms a region at the input end 102 of the shroud body 100 in which the diameter of the input end 102 reduces from larger than the diameter of the bell mouth 106 to the diameter of the shroud body 100 itself. When attached to the corresponding exhaust conduit, an annular gap is formed between the bell mouth 106 and the exhaust conduit.

At the output end 104 there is a curved shroud portion 108 which has a portion of U-shaped cross-section and a tip 109 furthest away from the input end 102. The curvature of the curved shroud portion 108 is such that the curved shroud portion 108 curves inwardly towards the central axis of the shroud body 100 as the curved shroud portion 108 extends away from the output end 104.

Also at the output end 104 are arranged two curved vanes 110, 112. The first curved vane 110 is located spaced apart from and partially in parallel with the curved shroud portion 108. The second curved vane 112 is located spaced apart from and partially in parallel with the first curved vane 110 and the curved shroud portion 108. Each of the two curved vanes 110, 112 has a planar portion and a curved portion. The curved vanes 110, 112 have rounded corners in their curved region. The planar portions of the curved vanes 110, 112 are arranged within slots 114, 116 respectively.

At the output end 104 a circumferential edge portion 118 of the shroud body 100 is sloped so that it is not perpendicular to the central axis of the shroud body 100. This sloped arrangement of the output end 104 of the shroud body 100 provides a wider opening at the output end 104 of the shroud body 100 than would be the case if the circumferential edge portion 118 was perpendicular to the central axis. Furthermore, the sloped edge portion 118 provides for axial offsetting of slots 114, 116.

In practice the various elements described are constructed substantially of stainless steel and welded together. It is conceivable that the apparatus may be moulded or produced by additive manufacturing methods.

The shroud body of this exemplary embodiment is approximately 140 mm long from the bell mouth 106 at the input end 102 to the nearest end of the curved shroud portion 108. The curved shroud portion 108 is approximately 100 mm long from the nearest end of the curved shroud portion 108 to the tip 109. The curvature of the curved shroud portion 108 has a radius of approximately 114 mm. The shroud body 100 has an approximately circular cross-section with a diameter of approximately 76 mm. The material thickness of the shroud body 100 and curved shroud portion 108 is approximately 1.5 mm.

The curved vanes 110, 112 have a total height of approximately 67 mm. The planar portions have a height of approximately 38 mm. The curvature of the curved region has a radius of approximately 36 mm. The rounded corners have a curvature with a radius of approximately 20 mm.

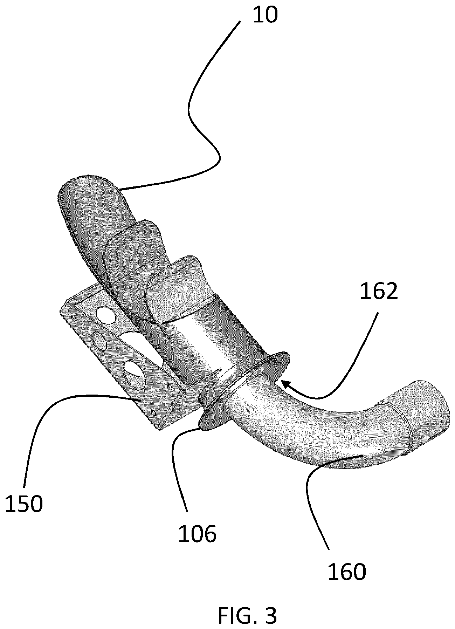

In Figure 3, the apparatus 10 is shown without all labels, to aid clarity. It will be understood that the apparatus 10 has the same features as described above. The apparatus 10 is mounted to a bracket 150 for mounting in turn to a part of a vehicle, such as a portion of an engine bay. An exhaust conduit 160 is shown in fluid communication with the apparatus 10, with an annular gap formed between the exhaust conduit 160 and the bell mouth opening. The exhaust conduit 160 is shown with an elbow having an approximately 90 degree turn. In practice, the apparatus 10 may be installed within an engine bay of a vehicle, with the central axis arranged at approximately 20 degrees to the horizontal.

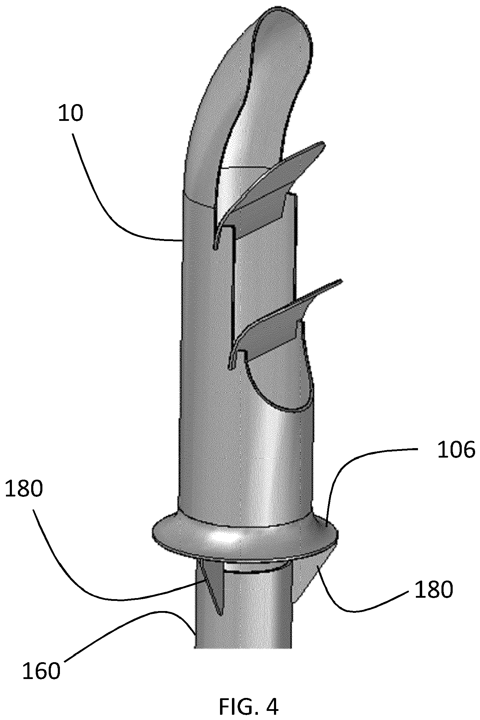

In Figure 4, the apparatus 10 is shown without all labels, to aid clarity. As in Figure 3, an exhaust conduit 160 is in fluid communication with the bell mouth opening 106, to form an annular gap between the exhaust conduit 160 and the bell mouth opening 106. The exhaust conduit 160 and the bell mouth opening 106 are held in position with respect to one another by fins 180.

The exemplary embodiment described performed as follows, at an engine bay temperature of approximately 80 celcius:

| Engine Operating point | Post DPF Temperature (celsius) | Temperature 100 mm from exhaust (celsius) | Pre DPF pressure (kPa) |
|---|---|---|---|
| Idle | 126 | 45 | 0.9 |
| Fast Idle | 156 | 58 | 5 |
| Regenerating | 607 | 157 | 5.6 |

## Claims

1. An exhaust gas cooling apparatus adapted to attach to an exhaust conduit, the apparatus comprising a tubular shroud body having input end and an output end, the input end having a bell mouth opening adapted to be in fluid communication with the said exhaust conduit and comprising an attachment means so that a substantially annular gap is formed between the said exhaust conduit and the bell mouth opening, the apparatus further comprising a curved shroud portion and two curved vanes each located at the output end of the shroud body, and wherein the curved shroud portion extends further in the direction of a central axis of the shroud body beyond the output end of the shroud body than each of the curved vanes, and in turn a first of the curved vanes extends further in the direction of the central axis of the shroud body beyond the output end than a second of the curved vanes, wherein the first of the curved vanes is located between the curved shroud portion and the second of the curved vanes, and wherein at the output end the shroud body has a an edge portion which is not perpendicular to the central axis of the shroud body.

2. An exhaust gas cooling apparatus according to claim 1, wherein the curved shroud portion has a substantially U-shaped cross-section.

3. An exhaust gas cooling apparatus according to claim 1 or claim 2, wherein the attachment means comprises one or more fins adapted to attach to an outer surface of the said exhaust conduit.

4. An exhaust gas cooling apparatus according to claim 1 or claim 2, wherein the attachment means comprises one or more fins attached to an outer surface of a tubular portion, the tubular portion adapted to engage with a corresponding tubular portion of the said exhaust conduit.

5. An exhaust gas cooling apparatus according to any preceding claim, wherein the shroud body comprises a slot adapted to accommodate each vane.

6. An exhaust gas cooling apparatus according to any preceding claim, wherein one or each of the vanes has a substantially planar portion.

7. An exhaust gas cooling apparatus according to any preceding claim, wherein vanes are arranged substantially parallel to one another.

8. An exhaust gas cooling apparatus according to any preceding claim, wherein planes of vanes are arranged to be substantially parallel to the central axis of the shroud body.

9. An exhaust gas cooling apparatus according to any preceding claim, wherein the shroud body has a substantially circular cross-section.
